# EUROPÄISCHE PATENTSCHRIFT

(11) **EP 2 665 607 B1**
(45) Veröffentlichungstag und Bekanntmachung des Hinweises auf die Patenterteilung: **15.04.2015**
(21) Anmeldenummer: 12700772.2
(22) Anmeldetag: 13.01.2012
(51) Int. Cl.: B42D 25/00

(54) **VERFAHREN ZUR HERSTELLUNG EINES MEHRSCHICHTIGEN DATENTRÄGERS SOWIE NACH DIESEM VERFAHREN HERGESTELLTER DATENTRÄGER**
METHOD FOR PRODUCING A MULTILAYER DATA CARRIER AND DATA CARRIER PRODUCED BY SAID METHOD
PROCÉDÉ DE FABRICATION D'UN SUPPORT DE DONNÉES MULTICOUCHE ET SUPPORT DE DONNÉES FABRIQUÉ SELON LEDIT PROCÉDÉ

(30) Priorität: 18.01.2011 CH 86112011
(43) Veröffentlichungstag der Anmeldung: 27.11.2013
(60) Teilanmeldung: 14164941.8
(73) Patentinhaber: Trüb AG, 5001 Aarau (CH)
(72) Erfinder: EGLI, Stefan, CH-4053 Basel (CH); WIDMER GOMRES, Heidi, CH-3046 Wahlendorf (CH)
(74) Vertreter: Frischknecht, Harry Ralph
(86) Internationale Anmeldenummer: PCT/CH2012/000008
(87) Internationale Veröffentlichungsnummer: WO 2012/097463

(56) Entgegenhaltungen:
- EP-A1- 0 159 828
- DE-A1- 4 410 431
- DE-A1-102007 034 716
- US-A1- 2008 136 160

## Beschreibung

### TECHNISCHES GEBIET

Die Erfindung betrifft ein Verfahren nach dem Oberbegriff des Anspruchs 1.

Zum Schutz von Datenträgern, beispielsweise Identitätskarten, Pässen, Führerausweisen, Bankkarten etc. mit personalisierten Daten werden vielfältige Sicherheitsmerkmale verwendet. Aus dem Stand der Technik sind die diversesten Sicherheitsmerkmale zum Schutz der Rohkarte ohne personalisierte Daten bekannt. Oftmals ist es jedoch so, dass die Fälscher nicht eine komplette Karte fälschen, sondern bei einer z.B. gestohlenen Karte die personalisierten Daten (Foto, Geburtsdatum, Unterschrift, Name etc.) abändern oder austauschen. Deshalb ist der Schutz dieser personalisierten Daten sehr wichtig. Aus dem Stand der Technik bekannte Techniken zum Schutz solcher Daten sind beispielsweise das Personalisieren eines Zweitbildes in eine Linsenstruktur, so dass das Bild nur unter einem bestimmten Betrachtungswinkel sichtbar ist. Eine andere Möglichkeit zur Einbringung eines Zweitbildes ist das Einbringen eines Rasterbildes in die Karte, indem die Karte perforiert wird. Diese Herstellmethoden sind vergleichsweise aufwändig und bedingen spezielle Einrichtungen bei der Kartenherstellung (Linsenstruktur) oder spezielle Maschinen zur Einbringung des Zweitbildes. Die vorliegende Erfindung zeigt einen Weg, wie die Personalisierung auf einem einfachen Weg ohne zusätzliche Maschinen geschützt werden kann.

### STAND DER TECHNIK

Die EP 1691 989 B1 offenbart einen Datenträger, der eine Metallschicht aufweist, die zwischen zwei transluzenten Deckschichten (Lichtdurchlässigkeit kleiner als 10%) angeordnet ist. Durch Ablation der Metallschicht mittels eines Laserstrahls soll ein "Wasserzeicheneffekt" entstehen.

Die EP 2 109 014 A1 offenbart ein sog. Overlay aus laserfähigem Polycarbonat mit einer holographischen Schicht auf einer Seite. Die holographische Schicht kann metallisiert und partiell mit dem Laser ablatiert werden.

Die WO 2009/139800 offenbart ein Sicherheitsdokument mit einer metallisierten Folie, welche vollflächig zwischen transparente Schichten einlaminiert ist. Ein Grossteil der Folie wird verändert/bedruckt um den Kartenhintergrund zu bilden. Ein Fenster der Folie wird unverändert gelassen. In dieses Fenster wird nach Fertigstellung der Karte mittels Laserablation ein Bild eingebracht, welches von der Vorderseite und Rückseite der Karte sichtbar ist.

Die EP 0 420 261 betrifft ein Verfahren zur Herstellung einer Serie von Datenträgern mit Hologrammen, bei denen die Hologramme durch partielle Zerstörung oder Veränderung der Beugungsstrukturen individualisiert werden.

Document DE-A-4410431 offenbart ein Verfahren nach dem Oberbegriff des Anspruchs 1.

### DARSTELLUNG DER ERFINDUNG

Der Erfindung liegt die Aufgabe zugrunde, ein Verfahren zur Herstellung eines Datenträgers zu schaffen, der gegen unberechtigte Veränderungen noch besser geschützt ist. Der Datenträger soll dennoch kostengünstig hergestellt werden. Die Aufgabe ist gemäss Anspruch 1 gelöst.

Die Erfindung betrifft insbesondere einen mehrschichtigen Datenträger aus thermoplastischem Kunststoff (z.B. Polycarbonat, PVC, PET-G etc.) Auf eine der Schichten wird gemäss einer Weiterbildung der Erfindung partiell eine vorzugsweise metallisierte dünne Schicht aufgebracht. Diese metallisierte Schicht kann beispielsweise aufgedampft, per Heissprägung aufgeprägt oder zusammen mit einer Trägerschicht (z.B. PET) zwischen zwei Schichten des Datenträgers einlaminiert werden. Die metallisierte Schicht ist mit Vorteil dünner als 4 µm, im Idealfall dünner als 1 µm. Wird sie zusammen mit einer Trägerschicht einlaminiert, sollte der Träger nicht dicker als 50 µm, im Idealfall ca. 20 µm oder dünner sein. Die metallisierte Schicht kann holographische Beugungsstrukturen enthalten. Die metallische Schicht besteht beispielsweise aus Aluminium, es sind aber auch andere Metalle, wie z.B. Titan denkbar. Die Techniken zur Aufbringung der Metallschicht auf eine thermoplastische Kunststofffolie sind dem Fachmann aus dem Stand der Technik bekannt. Die thermoplastische Kunststofffolie ist mit Vorteil dicker als 50 µm, im Idealfall 100 µm oder dicker.

Die Schicht mit der partiell aufgebrachten Metallschicht wird nun zusammen mit den weiteren Schichten der Karten zu einem Kartenkörper laminiert. Dabei wird die Schicht mit dem aufgebrachten Metall von mindestens einer weiteren transparenten Schicht bedeckt. Die Schicht, auf die das Metall aufgebracht ist, kann sowohl transparent als auch opak sein.

Bei der Personalisierung der Karte, d.h. beim Beschreiben der Karte mit den Daten des Karteninhabers wird nun mit einem Laser die Metallschicht partiell ablatiert, d.h. verdampft. An den Stellen, auf denen der Laser auf die Metallschicht auftrifft, verdampft die Metallfolie und es entsteht ein Loch im Metall. Somit können mit dem Laser Text oder auch Rasterbilder in die Metallfolie geschrieben werden. Für diesen Prozess kann dieselbe Art Laser verwendet werden, welcher auch für die aus dem Stand der Technik bekannte Personalisierung von Datenträgern (Lasermarkierung über Schwärzung) verwendet wird. Es ist jedoch auch möglich, einen Laser mit einer anderen Wellenlänge zu verwenden.

Bei der Verdampfung der Metallschicht ist durch die in der Metallfolie entstehende Lücke die Folie unter der Metallschicht sichtbar. Je nachdem, ob diese Folie transparent oder opak ist, ist das in der Metallschicht entstandene Bild in Durchsicht (bei transparenter Folie) oder Aufsicht (bei opaker Folie) optimal sichtbar. Aufgrund des Reflexionsverhaltens der Metallschicht ist das Bild in Aufsicht je nach Blickwinkel als "Positiv" (Dunkel) oder "Negativ" (Hell) erkennbar.

Nach einer Weiterbildung der Erfindung, wird die Folie vor dem Aufbringen der Metallschicht in einer Farbe bedruckt, so dass die Farbe nach der Ablation der Metallschicht durch die Lücken in der Metallschicht sichtbar ist und einen speziellen Effekt ergibt.

Nach der Erfindung wird die Metallschicht auf oder in ein transparentes Fenster im Datenträger auf- resp. eingebracht, so dass das ablatierte Bild in Durchsicht sichtbar ist, der Rest des Datenträgers jedoch eine opake Kernschicht aufweist.

Ein Verfahren wobei anstelle einer Metallschicht eine dünne opake Kunststoffschicht mit einem speziellen Additiv verwendet wird, fällt nicht unter der Erfindung. Dieses Additiv wird beim Bestrahlen die opake Kunststoffschicht so veränden, dass diese transparent oder zumindest transluzent wird. Das Additiv ist beispielsweise ein Pigment, das bei der Bestrahlung mit einem Laser zerstört wird. Solche Pigmente sind dem Fachmann bekannt. Anstelle eines pigmentierten Kunststoffs kann ein teilkristalliner opaker Kunststoff verwendet werden, bei dem durch den Temperatureintrag der Laserstrahlung die in Kristalliten angeordneten Makromoleküle in eine amorphe und transparente Struktur überführt werden.

Die opake Kunststoffschicht kann zum Beispiel als co-extrudierte Folie oder auch als alleinstehende Folie mit den bekannten Techniken in den Kartenaufbau eingefügt werden.

### KURZE BESCHREIBUNG DER ZEICHNUNGEN

Ausführungsbeispiele der Erfindung werden nachfolgend anhand der Zeichnung näher erläutert. Es zeigen:
- Fig. 1: schematisch eine Draufsicht auf einen Datenträger,
- Fig. 2: einen Querschnitt durch einen Datenträger,
- Fig. 3: einen Querschnitt durch einen erfindungsgemässen Datenträger nach einer Variante,
- Fig. 4: einen Querschnitt durch einen Datenträger nach einer weiteren Variante.

### BESCHREIBUNG BEVORZUGTER AUSFÜHRUNGSFORMEN

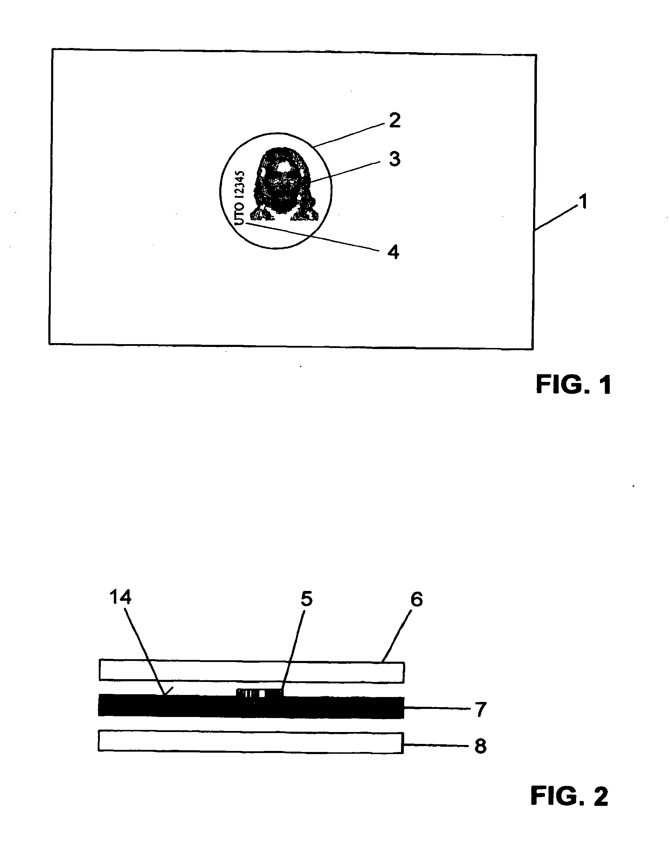

Die Figur 1 zeigt einen Datenträger 1, der gemäss der Figur 2 eine opake Kernfolie 7, eine untere transparente Deckfolie 8 sowie eine obere transparente Deckfolie 6 aufweist. Auf eine Oberseite 14 der Kernfolie 7 ist eine Metallschicht aufgebracht, beispielsweise aufgedampft oder durch Heissprägen aufgebracht. Als Metallschicht wird nachfolgend auch eine metallisierte Schicht oder eine metallische Schicht verstanden. Solche Schichten sind an sich bekannt. Sie sind vergleichsweise dünn und besitzen beispielsweise eine Dicke von 4 Mikrometern, vorzugsweise kleiner als 1 Mikrometer. Die Metallfolie kann auch als Hologramm ausgebildet sein. Die Deckfolie 6, die Kernfolie 7 und die untere Deckfolie 8 werden in an sich bekannter Weise durch Laminieren verbunden. Die Metallschicht 5 befindet sich dann entsprechend zwischen der Kernfolie 7 und der Deckfolie 6. Mit einem Lasergerät wird die Metallschicht so abgetragen, dass beispielsweise das in Fig. 1 gezeigte ablatierte Zweitbild 3 und der ablatierte Zweittext 4 entstehen. Diese entstehen vorzugsweise durch einen Durchbruch in der Metallschicht 5. Durch diese Durchbrüche hindurch ist die opake Kernfolie sichtbar. Vor dem Auftragen der Metallschicht kann die opake Kernfolie im Bereich der Metallschicht bzw. unterhalb dieser bedruckt sein. Das Zweitbild 3 und der Zweittext 4 können dann entsprechend in einem Farbton gesehen werden. Der Zweittext 4 erscheint dann somit beispielsweise blau oder rot.

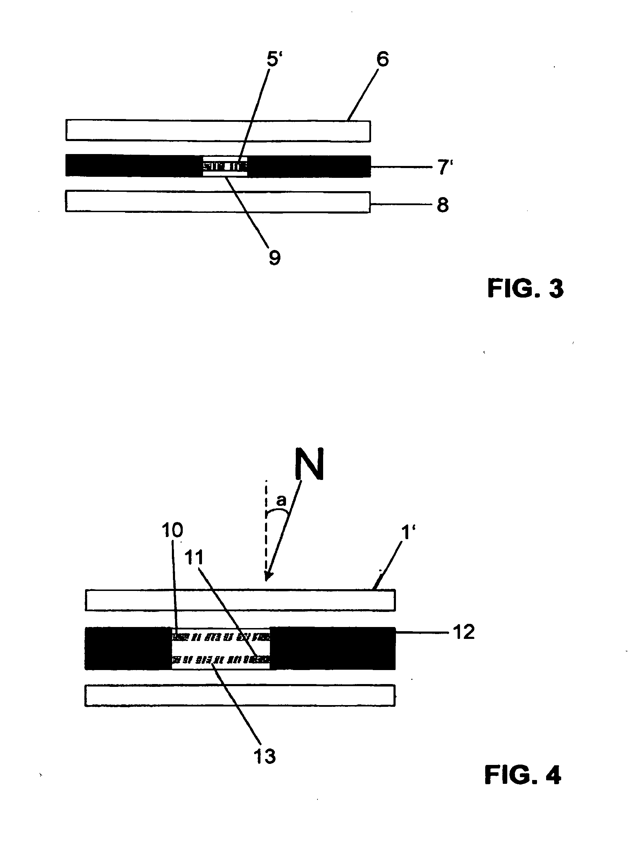

Der Datenträger nach der Fig. 3 besitzt eine Kernfolie 7', die eine transparente Folie 9 aufweist, auf welcher die Metallschicht 5' aufgebracht, beispielsweise aufgedampft ist. Die ablatierten Bereiche sind in diesem Fall von beiden Seiten, d.h. in Fig. 3 von oben durch die Deckfolie 6 und von unten durch die Deckfolie 8 sichtbar.

Die Fig. 4 zeigt einen Datenträger 1', der eine Kernfolie 12 aufweist, die eine transparente Folie 13 besitzt, welche eine erste Metallschicht 10 und eine zweite Metallschicht 11 aufweist. Diese Metallschichten 10 und 11 können ebenfalls aufgedampft oder durch Heissprägen aufgebracht sein. Diese beiden Metallfolien 10 und 11 besitzen zueinander einen Abstand von beispielsweise wenigstens 50 Mikrometer oder vorzugsweise 100 oder mehr Mikrometer. Bei der Ablation mit dem Laser wird wie angedeutet der Datenträger 1' in einem vorgegebenen Winkel A schräg gestellt. Die Ablation findet in beiden Metallschichten 10 und 11 statt. Falls es von der Laserintensität her nicht möglich ist, beide Metallschichten 10 und 11 von der gleichen Kartenseite her zu ablatieren, sind auch zwei passgenaue Laservorgänge auf der Rückseite und der Vorderseite des Datenträgers 1' denkbar. Hierbei wird jeweils die näherliegende Metallschicht 10 bzw. 11 bearbeitet. Durch das Gleichstellen des Datenträgers 1' vor der Laserbearbeitung ist das gelaserte Bild in Durchsicht nur unter dem entsprechenden Blickwinkel sichtbar. Es ist auch denkbar, zwei unterschiedliche Bilder mit sich unterscheidenden Winkeln zu lasern und so bei der Betrachtung mit unterschiedlichen Winkeln einen Kippeffekt zwischen den beiden Bildern bzw. den beiden Metallschichten 10 und 11 zu erhalten. Die Kernschicht 12 kann wie ersichtlich zwischen zwei Schichten bzw. Deckfolien befestigt und insbesondere einlaminiert werden.

### BEZUGSZEICHENLISTE

- 1: Datenträger
- 2: Metallfolie
- 3: ablatiertes Zweitbild
- 4: ablatierter Zweittext
- 5: Metallschicht
- 6: Deckfolie
- 7: opake Kernfolie
- 8: transparente Deckfolie
- 9: transparente Folie
- 10: erste Metallfolie
- 11: zweite Metallfolie
- 12: Kernfolie
- 13: transparente Folie
- 14: Oberseite

## Patentansprüche

1. Verfahren zur Herstellung eines mehrschichtigen Datenträgers (1), der eine erste Schicht (8) besitzt, die eine Oberseite aufweist, auf welcher eine diese Oberseite teilweise bedeckende opake Schicht angeordnet ist und mit einer zweiten Schicht (6), welche auf der ersten Schicht angeordnet und wenigstens in einem Teilbereich der opaken Schicht transparent ist, wobei die opake Schicht mit einem Laser partiell soweit abgetragen wird, dass die opake Schicht wenigstens einen Durchbruch aufweist und wobei die opake Schicht eine Metallschicht ist, **dadurch gekennzeichnet, dass** die erste Schicht (8) und die zweite Schicht (6) aus Kunststoff sind, und dass die besagte mit dem Laser bearbeitete opake Schicht in einem Fenster einer ansonsten wenigstens bereichsweisen opaken Kernschicht (7) angeordnet ist.

2. Verfahren nach Anspruch 1, **dadurch gekennzeichnet, dass** die opake Schicht zwischen der ersten und der zweiten Kunststoffschicht einlaminiert wird.

3. Verfahren nach einem der Ansprüche 1 bis 2, **dadurch gekennzeichnet, dass** die das Fenster bereitstellende opake Schicht die Kernschicht zwischen der ersten Schicht und der zweiten Schicht ist.

4. Verfahren nach einem der Ansprüche 1 bis 3, **dadurch gekennzeichnet, dass** der Datenträger mit wenigstens zwei parallel übereinander angeordneten Metallschichten hergestellt und diese beiden Metallschichten mit Durchbrüchen versehen werden.

5. Verfahren nach Anspruch 4, **dadurch gekennzeichnet, dass** die beiden Metallschichten vertikal zu deren Ebene oder geneigt zu deren Ebenen bestrahlt werden, so dass die Durchbrüche vertikal oder geneigt zu den genannten Ebenen verlaufen.

6. Verfahren nach Anspruch 4 oder 5, **dadurch gekennzeichnet, dass** die wenigstens zwei Metallschichten im Abstand zueinander angeordnet werden.

7. Verfahren nach einem der Ansprüche 4 bis 6, **dadurch gekennzeichnet, dass** die wenigstens zwei Metallschichten im Fenster der opaken Schicht, die eine Kernfolie ist, angeordnet werden.

8. Verfahren nach Anspruch 7, **dadurch gekennzeichnet, dass** die Kernfolie zwischen zwei transparenten Folien einlaminiert wird.

9. Datenträger hergestellt nach einem der Ansprüche 1 bis 8.

10. Datenträger nach Anspruch 9, **dadurch gekennzeichnet, dass** er eine Ausweiskarte, eine Seite eines Passes, eine Kreditkarte oder dergleichen ist.

11. Datenträger nach Anspruch 9 oder 10, **dadurch gekennzeichnet, dass** die opake Schicht eine Metallschicht ist, die auf eine aufgedampft, durch Heissprägung aufgeprägt oder zusammen mit einer Trägerschicht einlaminiert ist.

12. Datenträger nach einem der Ansprüche 9 bis 12, **dadurch gekennzeichnet, dass** die Metallschicht dünner als 4 Mikrometer, vorzugsweise dünner als 1 Mikrometer ist.

13. Datenträger nach einem der Ansprüche 9 bis 12, **dadurch gekennzeichnet, dass** im Fall von zwei Metallschichten, diese zueinander einen Abstand von wenigstens 50 Mikrometer, vorzugsweise wenigstens 100 Mikrometer aufweisen.

## Claims

1. A method for producing a multilayer data carrier (1), which has a first layer (8) that comprises an upper side on which an opaque layer partially covering this upper side is arranged, and having a second layer (6) which is arranged on the first layer and is transparent at least in a subregion of the opaque layer, wherein the opaque layer is partially removed using a laser until the opaque layer has at least one recess and wherein the opaque layer is a metal layer, **characterized in that** the first layer (8) and the second layer (6) are of plastic and **in that** said opaque layer which is treated by said laser is arranged in a window of an otherwise at least regionally opaque core layer (7).

2. The method as claimed in claim 1, **characterized in that** the opaque layer is laminated between the first and second plastic layers.

3. The method according to claim 1 or 2, wherein the opaque layer providing said window is the core layer between the first layer and the second layer.

4. The method as claimed in one of claims 1 to 3, **characterized in that** the data carrier is produced with at least two metal layers arranged parallel above one another, and these two metal layers are provided with recesses.

5. The method as claimed in claim 4, **characterized in that** the two metal layers are exposed vertically with respect to their plane or at an inclination with respect to their planes, so that the recesses extend vertically or at an inclination with respect to said planes.

6. The method as claimed in claim 4 or 5, **characterized in that** the at least two metal layers are arranged at a distance from one another.

7. The method as claimed in one of claims 4 to 6, **characterized in that** the at least two metal layers are arranged in a window of the opaque layer that is a core sheet.

8. The method as claimed in claim 7, **characterized in that** the core sheet is laminated between two transparent sheets.

9. A data carrier produced according to one of claims 1 to 8.

10. The data carrier as claimed in claim 9, **characterized in that** it is an identity card, a page of a passport, a credit card or the like.

11. The data carrier as claimed in claim 9 or 10, **characterized in that** the opaque layer is a metal layer which is vapor deposited onto a carrier layer, applied by hot stamping or laminated together with a carrier layer.

12. The data carrier as claimed in one of claims 9 to 11, **characterized in that** the metal layer is thinner than 4 micrometers, preferably thinner than 1 micrometer.

13. The data carrier as claimed in one of claims 9 to 12, **characterized in that** in the case of two metal layers, they are at a distance from one another of at least 50 micrometers, preferably at least 100 micrometers.

## Revendications

1. Procédé de fabrication d'un support de données multicouche (1), qui comporte une première couche (8) qui présente une face supérieure, sur laquelle une couche opaque recouvrant partiellement cette face supérieure est disposée, et avec une deuxième couche (6), qui est disposée sur la première couche et qui est transparente au moins dans une région partielle de la couche opaque, dans lequel on enlève partiellement la couche opaque avec un laser jusqu'à ce que la couche opaque présente au moins une traversée et dans lequel la couche opaque est une couche métallique, **caractérisé en ce que** la première couche (8) et la deuxième couche (6) sont en matière plastique, et **en ce que** ladite couche opaque usinée avec le laser est disposée dans une fenêtre d'une couche de noyau (7) par ailleurs au moins localement opaque.

2. Procédé selon la revendication 1, **caractérisé en ce que** la couche opaque est contrecollée entre la première et la deuxième couches de matière plastique.

3. Procédé selon l'une des revendications 1 à 2, **caractérisé en ce que** la couche opaque présentant la fenêtre est la couche de noyau entre la première couche et la deuxième couche.

4. Procédé selon l'une quelconque des revendications 1 à 3, **caractérisé en ce que** le support de données est fabriqué avec au moins deux couches métalliques disposées parallèlement l'une au-dessus de l'autre et ces deux couches métalliques sont munies de traversées.

5. Procédé selon la revendication 4, **caractérisé en ce que** les deux couches métalliques sont irradiées perpendiculairement à leur plan ou obliquement à leurs plans, de telle manière que les traversées soient orientées perpendiculairement ou obliquement par rapport auxdits plans.

6. Procédé selon la revendication 4 ou 5, **caractérisé en ce que** lesdites au moins deux couches métalliques sont disposées à distance l'une de l'autre.

7. Procédé selon l'une quelconque des revendications 4 à 6, **caractérisé en ce que** lesdites au moins deux couches métalliques sont disposées dans la fenêtre de la couche opaque, qui est une feuille de noyau.

8. Procédé selon la revendication 7, **caractérisé en ce que** la feuille de noyau est contrecollée entre deux feuilles transparentes.

9. Support de données fabriqué selon l'une quelconque des revendications 1 à 8.

10. Support de données selon la revendication 9, **caractérisé en ce qu'**il est une carte d'identité, une page d'un passeport, une carte de crédit ou analogue.

11. Support de données selon la revendication 9 ou 10, **caractérisé en ce que** la couche opaque est une couche métallique, qui est vaporisée, marquée par une empreinte à chaud sur une couche de support ou contrecollée avec une couche de support.

12. Support de données selon l'une quelconque des revendications 9 à 11, **caractérisé en ce que** la couche métallique a une épaisseur inférieure à 4 micromètres, de préférence inférieure à 1 micromètre.

13. Support de données selon l'une quelconque des revendications 9 à 12, **caractérisé en ce que**, dans le cas de deux couches métalliques, celles-ci présentent l'une par rapport à l' autre une distance d' au moins 50 micromètres, de préférence d'au moins 100 micromètres.
